# EUROPEAN PATENT APPLICATION

(11) **EP 4 693 429 A1**
(43) Date of publication of application: **11.02.2026**
(21) Application number: 25194061.5
(22) Date of filing: 05.08.2025
(51) Int. Cl.: H01M 4/04, H01M 4/131, H01M 4/136, H01M 4/505, H01M 4/525, H01M 4/58, H01M 10/0525, H01M 4/02

(54) **POSITIVE ELECTRODE FOR RECHARGEABLE LITHIUM BATTERY, METHOD OF MANUFACTURING THE SAME, AND RECHARGEABLE LITHIUM BATTERY INCLUDING THE SAME**

(30) Priority: 09.08.2024 KR 20240106479
(71) Applicant: SAMSUNG SDI CO., LTD., Yongin-si, Gyeonggi-do 17084 (KR)
(72) Inventor: SUH, Soonsung, Yongin-si, Gyeonggi-do 17084 (KR); KIM, Yeongap, Yongin-si, Gyeonggi-do 17084 (KR)
(74) Representative: Maiwald GmbH

(57) **Abstract**

Examples of the disclosure include positive electrodes, manufacturing methods thereof, and rechargeable lithium batteries. The positive electrode includes a positive electrode current collector and a positive electrode active material layer on the positive electrode current collector. The positive electrode active material layer includes a first positive electrode active material layer and a second positive electrode active material layer that are stacked on the positive electrode current collector. The first positive electrode active material layer includes a layered positive electrode active material. The second positive electrode active material layer includes an olivine-based positive electrode active material. The first positive electrode active material layer includes first holes. The second positive electrode active material layer includes second holes.

## Description

### BACKGROUND

Examples of the present disclosure relate to a positive electrode for a rechargeable lithium battery, a method of manufacturing the positive electrode, and a rechargeable lithium battery including the positive electrode, and more particularly, to a multi-layered positive electrode, a method of manufacturing the multi-layered positive electrode, and a rechargeable lithium battery including the multi-layered positive electrode.

With increasing presence of battery-using electronic devices, such as, e.g., mobile phones, laptop computers, electric vehicles, and the like, there is increasing demand for rechargeable batteries with high energy density and high capacity. Therefore, improving performance of rechargeable lithium batteries may be advantageous.

A rechargeable lithium battery includes a positive electrode, a negative electrode, and an electrolyte, the positive and negative electrodes include an active material in which intercalation and deintercalation are possible, and the rechargeable lithium battery generates electrical energy caused by oxidation and reduction reactions when lithium ions are intercalated and deintercalated.

### SUMMARY

An example embodiment of the present disclosure includes a positive electrode with desired or improved capacity and improved charge/discharge characteristics for a rechargeable lithium battery.

An example embodiment of the present disclosure includes a rechargeable lithium battery with desired or improved capacity and improved charge/discharge characteristics.

According to an example embodiment of the present disclosure, a positive electrode for a rechargeable lithium battery may include a positive electrode current collector, and a positive electrode active material layer on the positive electrode current collector. The positive electrode active material layer may include a first positive electrode active material layer and a second positive electrode active material layer that are stacked, e.g., sequentially stacked, on the positive electrode current collector. The first positive electrode active material layer may include a layered positive electrode active material. The second positive electrode active material layer may include an olivine-based positive electrode active material. The first positive electrode active material layer may include a plurality of first holes. The second positive electrode active material layer may include a plurality of second holes.

According to an example embodiment of the present disclosure, a method of manufacturing a positive electrode for a rechargeable lithium battery may include providing a positive electrode current collector, forming a first positive electrode active material layer on the positive electrode current collector, performing a first hole forming process on the first positive electrode active material layer to form a plurality of first holes, forming a second positive electrode active material layer on the first positive electrode active material layer on which the first hole forming process is performed, and performing a second hole forming process on the second positive electrode active material layer to form a plurality of second holes. The first positive electrode active material layer may include a layered positive electrode active material. The second positive electrode active material layer may include an olivine-based positive electrode active material.

According to an example embodiment of the present disclosure, a rechargeable lithium battery may include the positive electrode discussed above, a negative electrode that includes a negative electrode current collector and a negative electrode coating layer on the negative electrode current collector, and a separator between the positive electrode and the negative electrode.

### BRIEF DESCRIPTION OF DRAWINGS

FIG. 1 illustrates a simplified conceptual diagram illustrating a rechargeable lithium battery, according to an example embodiment of the present disclosure.
FIGS. 2 to 5 illustrate diagrams illustrating a rechargeable lithium battery, according to an example embodiment of the present disclosure.
FIG. 6 illustrates a cross-sectional view illustrating a rechargeable lithium battery, according to an example embodiment of the present disclosure.
FIG. 7 illustrates an enlarged view illustrating an example of section M depicted in FIG. 6.
FIG. 8 illustrates an enlarged plan view partially illustrating a first positive electrode active material layer, according to an example embodiment of the present disclosure.
FIG. 9 illustrates an enlarged view partially illustrating a second positive electrode active material layer, according to an example embodiment of the present disclosure.
FIGS. 10 and 11 illustrate cross-sectional views illustrating a positive electrode active material layer, according to an example embodiment of the present disclosure.
FIG. 12 illustrates a cross-sectional view illustrating a method of manufacturing a positive electrode, according to an example embodiment of the present disclosure.
FIG. 13 is a flowchart illustrating a method of manufacturing a positive electrode for a rechargeable lithium battery, according to various examples of the disclosure.

### DETAILED DESCRIPTION

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this disclosure do not exclude the presence or addition of one or more other components.

As used herein, the term "combination thereof" may refer to a mixture, a stack, a composite, a copolymer, an alloy, a blend, or a reaction product.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

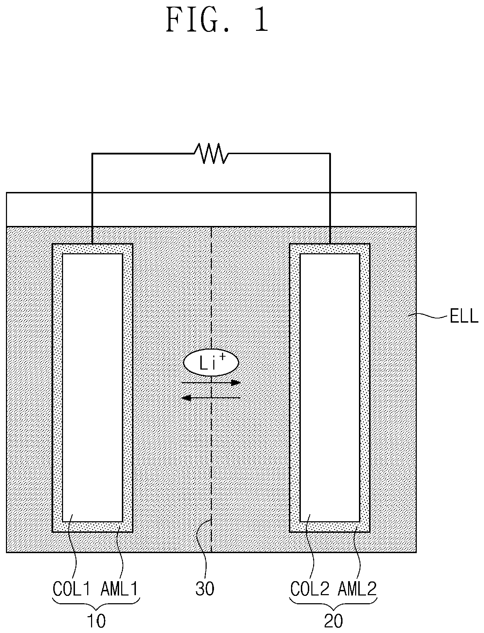

FIG. 1 illustrates a simplified conceptual diagram illustrating a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and further include a binder and/or a conductive material.

For example, the positive electrode 10 may further include an additive that can constitute a sacrificial positive electrode.

An amount of the positive electrode active material may be in a range of about 90 wt% to about 99.5 wt%, or about 95 wt% to about 99.5 wt%, relative to 100 wt% of the positive electrode active material layer AML1. An amount of each of the binder and the conductive material may be in a range of about 0.5 wt% to about 10 wt%, or about 0.5 wt% to about 5 wt% relative to 100 wt% of the positive electrode active material layer AML1.

The binder may be configured to improve attachment of positive electrode active material particles to each other, and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be included to provide an electrode with conductivity, and any suitable conductive material that does not cause a chemical change in a battery may be included as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be included as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and a metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes at least one of Ni, Co, Mn, or a combination thereof, X is or includes at least one of Al, Ni, Co, Mn, Cr, Fe, Mg, Sr, V, a rare-earth element, or a combination thereof, D is or includes at least one of O, F, S, P, or a combination thereof, G is or includes at least one of Al, Cr, Mn, Fe, Mg, La, Ce, Sr, V, or a combination thereof, and L¹ is or includes at least one of Mn, Al, or a combination thereof.

For example, the positive electrode active material may be or include a high-nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material may achieve high capacity, and may thus be applied to a high-capacity and high-density rechargeable lithium battery.

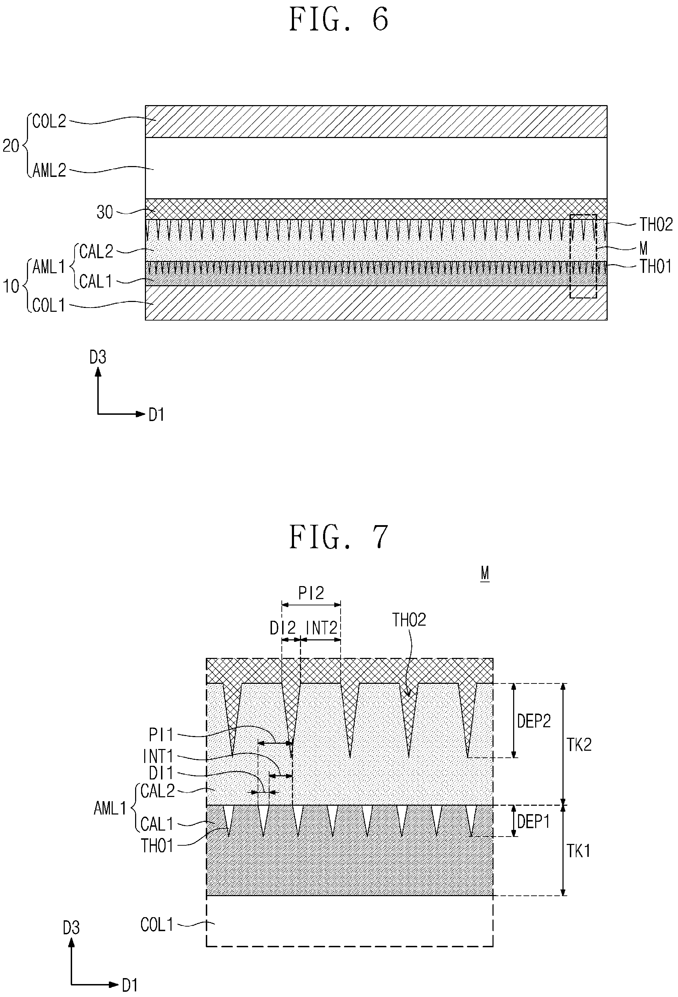

The positive electrode active material layer AML1 according to some example embodiments of the present disclosure is further discussed in detail with reference to FIGS. 6 to 9.

### Negative Electrode 20

The negative electrode 20 for a rechargeable lithium battery may include a current collector COL2 and a negative electrode active material layer AML2 located on the current collector COL2. The negative electrode active material layer AML2 may include a negative electrode active material and may further include a binder and/or a conductive material.

For example, the negative electrode active material layer AML2 may include a negative electrode active material in a range of about 90 wt% to about 99 wt%, a binder in a range of about 0.5 wt% to about 5 wt%, and a conductive material in a range of about 0 wt% to about 5 wt%.

The binder may be configured to improve attachment of negative electrode active material particles to each , and to improve attachment of the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as at least one of non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include at least one of a Si-based negative electrode active material or a Sn-based negative electrode active material. The Si-based negative electrode active material may include at least one of silicon, silicon-carbon composite, SiOx (where 0<x<2), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, and combinations thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) located on a surface of the secondary particle. The amorphous carbon may also be located between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles, and may also include an amorphous carbon coating layer located on a surface of the core.

The Si-based negative electrode active material or the Sn-based negative electrode active material may be combined with a carbon-based negative electrode active material.

### Separator 30

Based on type of the rechargeable lithium battery, the separator 30 may be present between the positive electrode 10 and the negative electrode 20. The separator 30 may include at least one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer located on one or opposite surfaces of the porous substrate, the coating layer includes an organic material, an inorganic material, or a combination thereof.

The porous substrate may be or include a polymer layer including one polyolefin such as or including at least one of polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include at least a polyvinylidenefluoride-based copolymer or a (meth)acrylic copolymer.

The inorganic material may include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack that includes a coating layer including the organic material and a coating layer including an inorganic material.

### Electrolyte ELL

The electrolyte ELL for a rechargeable lithium battery may include a non-aqueous organic solvent and a lithium salt. The non-aqueous organic solvent may be configured as a medium for transmitting ions that participate in an electrochemical reaction of the battery. The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may at least one of include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be included alone or in a mixture of two or more substances. In addition, when a carbonate-based solvent is included, a cyclic carbonate and a chain carbonate may be mixed, and the cyclic carbonate and the chain carbonate may be mixed in a volume ratio in a range of about 1:1 to about 1:9.

The lithium salt may be or include a material that is dissolved in the non-aqueous organic solvent to constitute a supply source of lithium ions in a battery, and plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Rechargeable Lithium Battery

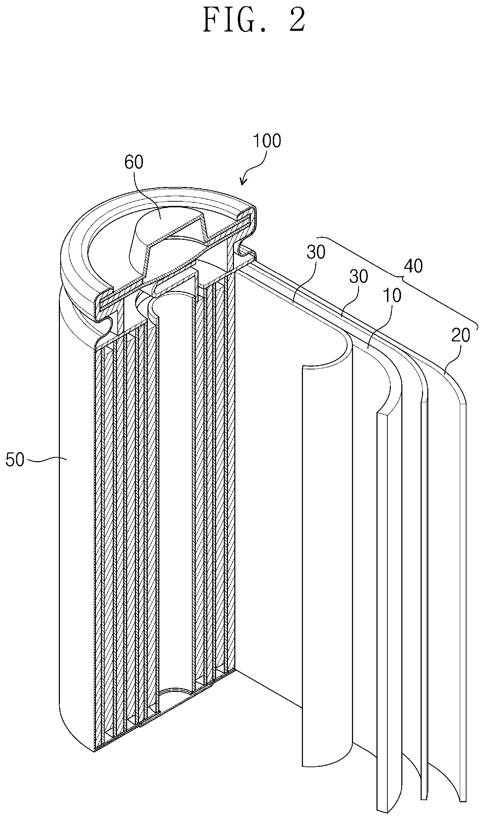

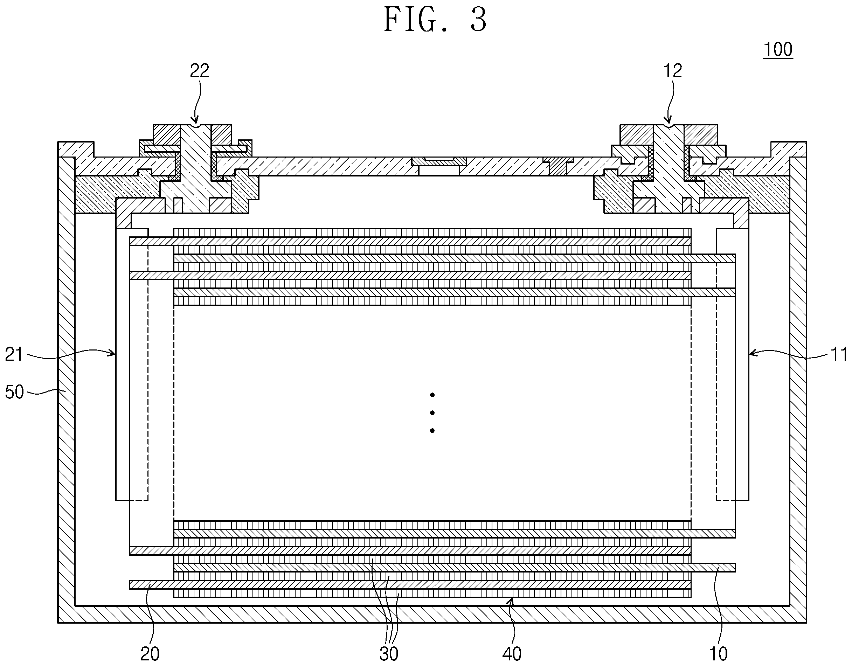

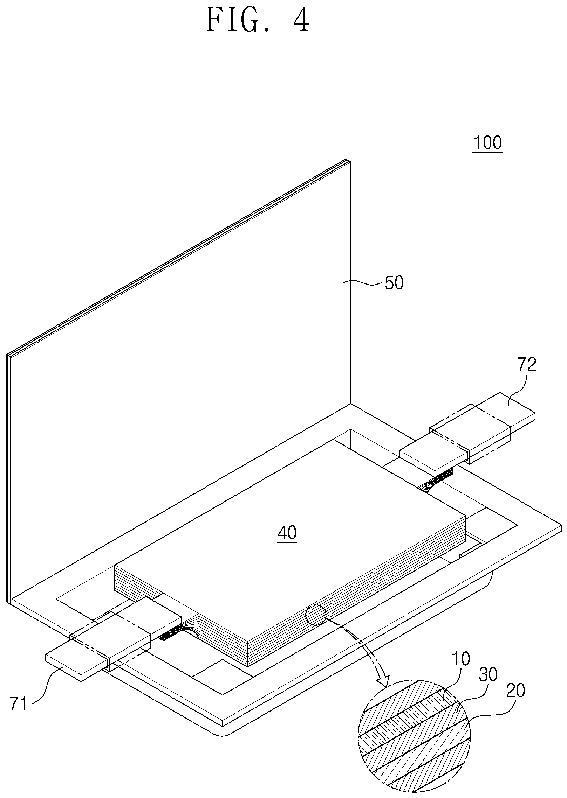

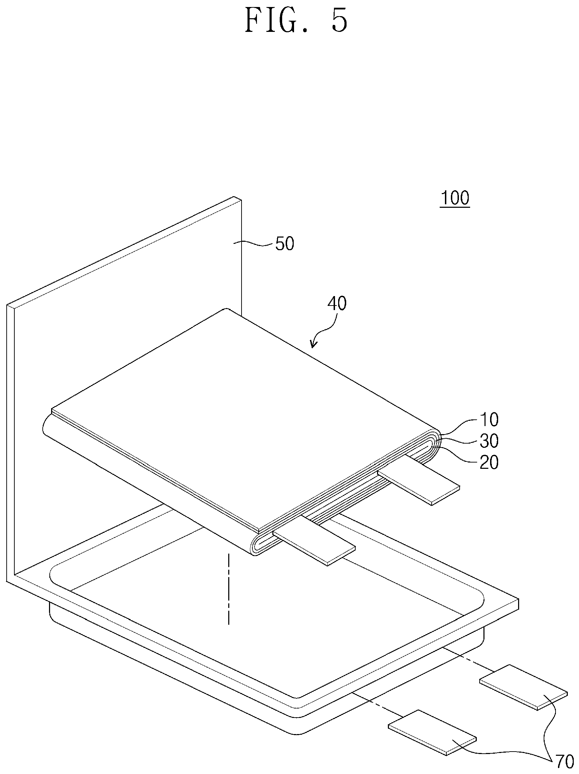

Based on the shape of a rechargeable lithium battery, the rechargeable lithium battery may be classified into cylindrical, prismatic, pouch, and coin types. FIGS. 2 to 5 show simplified diagrams illustrating a rechargeable lithium battery, according to an example embodiment, FIG. 2 illustrates a cylindrical battery, FIG. 3 illustrates a prismatic battery, and FIGS. 4 and 5 illustrate pouch-type batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not illustrated). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40 to the outside of the battery 100.

The following description focuses on a rechargeable lithium battery, according to some example embodiments of the present disclosure.

FIG. 6 is a cross-sectional view illustrating a rechargeable lithium battery, according to an example embodiment of the present disclosure. Referring to FIG. 6, as discussed above with reference to FIG. 1, a rechargeable lithium battery according to an example embodiment of the present disclosure may include a positive electrode 10, a negative electrode 20, and a separator 30 between the positive electrode 10 and the negative electrode 20. Although not explicitly illustrated in FIG. 6, the rechargeable lithium battery according to an example embodiment of the present disclosure may further include an electrolyte ELL. The positive electrode 10, the negative electrode 20, and the separator 30 may be impregnated in the electrolyte ELL.

The positive electrode 10 may include a positive electrode current collector COL1, and a positive electrode active material layer AML1 on the positive electrode current collector COL1. The negative electrode 20 may include a negative electrode current collector COL2, and a negative electrode active material layer AML2 on the negative electrode current collector COL2. The separator 30 may be interposed between the positive electrode active material layer AML1 and the negative electrode active material layer AML2.

The positive electrode active material layer AML1 according to an example embodiment of the present disclosure may have a bi-layered structure. For example, the positive electrode active material layer AML1 may include a first positive electrode active material layer CAL1 as a lower layer section, and a second positive electrode active material layer CAL2 as an upper layer section. The first positive electrode active material layer CAL1 may be located on the positive electrode current collector COL1. The second positive electrode active material layer CAL2 may be located on the first positive electrode active material layer CAL1.

The first and second positive electrode active material layers CAL1 and CAL2 may include different positive electrode active materials. The first and second positive electrode active material layers CAL1 and CAL2 may have different compositions from each other. Each, or at least one, of the first and second positive electrode active material layers CAL1 and CAL2 may include one of a layered positive electrode active material or an olivine-based positive electrode active material.

### Layered Positive Electrode Active Material

In an example embodiment, the first positive electrode active material layer CAL1 may include a layered positive electrode active material. The layered positive electrode active material may have a single particle shape. In this description, the term "single particle" may denote an individual particle without a grain boundary therein. The single particle may indicate one particle, a monolith structure, a single unitary structure, or a non-aggregated particle, in which particles are not aggregated together with one another but present as an independent phase in terms of morphology. For example, a single particle may be a single crystal. Alternatively, the single particle may be a particle containing several crystals. The single particle may be independently divided. Alternatively, the single particle may have a form in which about 2 to about 100 independent particles are attached to each other. In an example embodiment, the layered positive electrode active material may be shaped like one single particle. In an example embodiment, the layered positive electrode active material may have a shape in which a plurality of single particles are adhered to each other. As the positive electrode active material according to the present disclosure includes the layered positive electrode active material shaped like a single particle, a rechargeable battery may achieve a high capacity and a high energy density.

In an example embodiment, the layered positive electrode active material may include a first coating layer on a surface thereof. As the layered positive electrode active material includes the first coating layer, it may be possible to effectively reduce or suppress structural collapse that may be due to repetition of charge and discharge. Accordingly, a rechargeable battery may improve in cycle-life characteristics.

The first coating layer may include at least one of a boron-containing compound, an aluminum-containing compound, or a combination thereof. A metal-containing compound in the first coating layer may be or include, for example, at least one of a metal oxide, metal hydroxide, metal carbonate, or a composite or mixture thereof. The metal-containing compound may further include other metal or a non-metal element. For example, the first coating layer may further include one or more of lithium, manganese, and nickel.

A method of measuring an amount of metal in the first coating layer of the layered positive electrode active material may include performing scanning electron microscope-energy dispersive X-ray spectroscopy (SEM-EDS) on the layered positive electrode active material. An amount of boron and/or aluminum in the first coating layer may be ascertained by the analysis. An amount of metal in the first coating layer may be measured by inductively coupled plasma mass spectrometry (ICP-MS) or inductively coupled plasma optical emission spectroscopy (ICP-OES), in addition to SEM-EDS.

The layered positive electrode active material may include a lithium-nickel-based composite oxide as a nickel-based active material. For example, the layered positive electrode active material may include a high-nickel-based positive electrode active material containing a high amount of nickel. The high-nickel-based positive electrode active material may achieve high capacity and high performance. For example, the layered positive electrode active material may include a layered lithium-nickel-based composite oxide represented by Chemical Formula 1 below.

Chemical Formula 1: Liₐ₁Niₓ₁Co_{y1}Mn_{z1}X_{c1}O_{2-b1}

In Chemical Formula 1, 0.8≤a1≤1.2, 0.9≤x1≤1.0, 0≤y1≤0.1, 0≤z1≤0.1 0≤c1≤0.05, 0≤b1≤0.05, and x1+y1+z1+c1=1. X may be or include at least one of Al, Ti, Mg, Zr, Mo, and Nb. X may be or include a dopant doped in the layered positive electrode active material.

### Olivine-based Positive Electrode Active Material

In an example embodiment, the second positive electrode active material layer CAL2 may include an olivine-based positive electrode active material. The olivine-based positive electrode active material may have a single particle shape. The single particle may have a form in which about 2 to about 100 independent particles are attached to each other.

In an example embodiment, the olivine-based positive electrode active material may include a second coating layer on a surface thereof. The second coating layer may substantially entirely or partially cover the surface of the olivine-based positive electrode active material. For example, the second coating layer may include carbon and/or a carbon-containing compound. The second coating layer may further include at least one of a titanium-containing compound, a magnesium-based compound, and a vanadium-containing compound. A metal-containing compound, such as or including at least one of a titanium-containing compound, a magnesium-containing compound, and a vanadium-containing compound, may be a metal oxide, metal hydroxide, metal carbonate, or a composite or mixture thereof. The metal-containing compound may further include another metal or a non-metal element. For example, the metal-containing compound may further include lithium. The second coating layer may improve structural stability and electrical conductivity of the olivine-based positive electrode active material. For example, the olivine-based positive electrode active material may include an olivine-based lithium compound represented by Chemical Formula 2 below.

Chemical Formula 2: Liₐ₂Feₓ₂B_{y2}PO_{4-b2}

In Chemical Formula 2, 0.8≤a2≤1.2, 0.1≤x2≤1.0, 0≤y2≤0.05, 0≤b2≤0.05, and x2+y2≤1. For example, x2+y2=1. B may be or include at least one of Ti, Mg, V, and Nb. B may be or include a dopant doped in the olivine-based positive electrode active material. For example, B may include Ti.

The olivine-based positive electrode active material may further include carbon derived from the second coating layer. An amount of carbon in the olivine-based positive electrode active material may range from about 0.5 wt% to about 5 wt%, from about 0.5 wt% to about 3 wt%, or from about 0.5 wt% to about 2 wt%.

Referring still to FIG. 6, a plurality of holes THO1 and THO2 may be formed to have given sizes and depths on each of the first positive electrode active material layer CAL1 and the second positive electrode active material layer CAL2 that are included in the positive electrode active material layer AML1, according to an example embodiment of the present disclosure. A non-uniform transfer rate of lithium ions between the upper layer section and the lower layer section on each of which the plurality of holes THO1 and THO2 are formed may be improved to enhance rapid charge characteristics of batteries.

The first positive electrode active material layer CAL1 may include a plurality of first holes THO1, and the second positive electrode active material layer CAL2 may include a plurality of second holes THO2.

The plurality of first holes THO1 may be formed on an upper portion of the first positive electrode active material layer CAL1, and may extend from top toward bottom surfaces of the first positive electrode active material layer CAL1. The first holes THO1 may be adjacent to, or in contact with, the second positive electrode active material layer CAL2 disposed on the first positive electrode active material layer CAL1. The plurality of second holes THO2 may be formed on an upper portion of the second positive electrode active material layer CAL2, and may extend from top toward bottom surfaces of the second positive electrode active material layer CAL2. Alternatively, the second holes THO2 may extend in a direction opposite to a third direction D3 indicated on FIG. 6. The second holes THO2 may be adjacent to, or in contact with, the separator 30 disposed on the second positive electrode active material layer CAL2.

A density (or pitch) and depth of the first holes THO1 in the first positive electrode active material layer CAL1 may be different from a density (or pitch) and depth of the second holes THO2 in the second positive electrode active material layer CAL2. The density and depth of the first holes THO1 and the second holes THO2 is further discussed in detail below with reference to FIGS. 7 to 9.

In an example embodiment, a volume occupied by the first holes THO1 may be in a range of about 1 % to about 10 % of a total volume of the first positive electrode active material layer CAL1. In addition, a volume occupied by the second holes THO2 may be in a range of about 1 % to about 10 % of a total volume of the second positive electrode active material layer CAL2.

With reference to FIGS. 7 to 9, the following description focuses on a positive electrode for a rechargeable lithium battery, according to an example embodiment of the present disclosure.

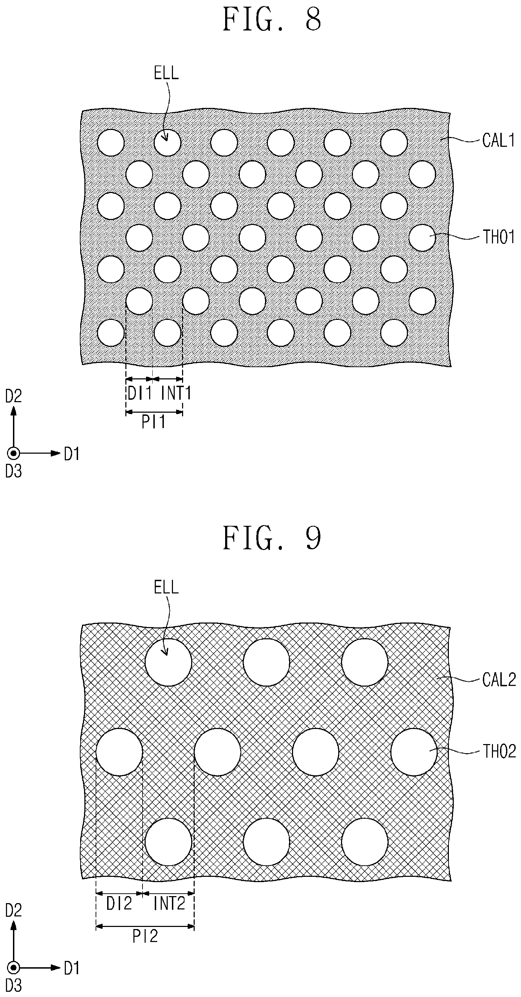

FIG. 7 is an enlarged view illustrating an example of section M depicted in FIG. 6. FIG. 8 is an enlarged plan view partially illustrating a first positive electrode active material layer according to an example embodiment of the present disclosure. FIG. 9 is an enlarged view partially illustrating a second positive electrode active material layer, according to an example embodiment of the present disclosure.

Referring to FIG. 7, in an example embodiment of the present disclosure, a plurality of first holes THO1 may be formed to have a relatively small depth and relatively high density. The first holes THO1 may be spaced apart from each other at a given interval along one surface of the first positive electrode active material layer CAL1. In contrast, a plurality of second holes THO2 may be formed to have relatively low density and relatively large depth. The second holes THO2 may be spaced apart from each other at a given interval along one surface of the second positive electrode active material layer CAL2.

Referring to FIG. 8, the plurality of first holes THO1 may be arranged at a first pitch PI1 in a first direction D1. Each, or at least one, of the first holes THO1 may have a first diameter DI1. A subsequently described hole forming process may cause the first holes THO1 to have different diameters from each other. The first diameter DI1 may refer to an average diameter. A first distance INT1 may be provided as an interval between the first holes THO1 that are arranged adjacent to each other. The first pitch PI1 may be a sum of the first diameter DI1 and the first distance INT1.

In an example embodiment of the present disclosure, a ratio of the first diameter DI1 to the first pitch PI1 may range from about 0.3 to about 0.6, from about 0.2 to about 0.4, or from about 0.1 to about 0.4. For example, the ratio (DI1/PI1) may range from about 0.2 to about 0.4.

When the ratio (DI1/PI1) is less than about 0.2, a first depth DEP1 of the first hole THO1 may not be formed deep enough to allow sufficient penetration of an electrolyte into the first positive electrode active material layer CAL1. In contrast, when the ratio (DI1/PI1) is greater than about 0.4, a size of the first hole THO1 may become excessively increased and may cause a deterioration of the structural stability of the positive electrode active material layer AML1. Moreover, the first holes THO1 may cause the first positive electrode active material layer CAL1 to have a reduced volume, which may cause a decrease in capacity of the positive electrode active material layer AML1.

Referring to FIG. 9, a plurality of second holes THO2 may be arranged at a second pitch PI2 in the first direction D1. Each, or at least one, of the second holes THO2 may have a second diameter DI2. A subsequently described hole forming process may cause the second holes THO2 to have different diameters from each other. The second diameter DI2 may refer to an average diameter. A second distance INT2 may be provided as an interval between the second holes THO2 that are arranged adjacent to each other. The second pitch PI2 may be a sum of the second diameter DI2 and the second distance INT2.

In an example embodiment of the present disclosure, a ratio of the second diameter DI2 to the second pitch PI2 may range from about 0.3 to about 0.6, from about 0.2 to about 0.4, or from about 0.1 to about 0.4. For example, the ratio (DI2/PI2) may range from about 0.2 to about 0.4.

When the ratio (DI2/PI2) is less than about 0.2, a second depth DEP2 of the second hole THO2 may not be formed deep enough to allow sufficient penetration of an electrolyte into the second positive electrode active material layer CAL2. In contrast, when the ratio (DI2/PI2) is greater than about 0.4, a size of the second hole THO2 may become excessively increased to cause a deterioration of the structural stability of the positive electrode active material layer AML1. Moreover, the second holes THO2 may cause the second positive electrode active material layer CAL2 to have a reduced volume, which may cause a decrease in capacity of the positive electrode active material layer AML1.

As discussed above, FIGS. 8 and 9 depict enlarged plan views partially illustrating the first positive electrode active material layer CAL1 and the second positive electrode active material layer CAL2, respectively. The first positive electrode active material layer CAL1 illustrated in FIG. 8 may have the same area as the area of the second positive electrode active material layer CAL2 illustrated in FIG. 9. The number of the first holes THO1 in a unit area of the first positive electrode active material layer CAL1 may be greater than the number of the second holes THO2 in a unit area of the second positive electrode active material layer CAL2. According to an example embodiment of the present disclosure, a density of the plurality of first holes THO1 may be greater than a density of the plurality of second holes THO2.

In this description, the term "density" may refer to the number of holes per unit area.

For example, FIG. 8 depicts 46 first holes THO1 being formed on a unit area, and FIG. 9 depicts 10 second holes THO2 being formed on a unit area. The number of holes, however, is not limited to those illustrated in FIGS. 8 and 9, and may be changed depending on hole pitches.

For example, the first pitch PI1 of the first holes THO1 may be less than the second pitch PI2 of the second holes THO2. In an example embodiment, a ratio of the second pitch PI2 to the first pitch PI1 may range from about 2 to about 5.

According to an example embodiment of the present disclosure, the first diameter DI1 of the first holes THO1 may be less than the second diameter DI2 of the second holes THO2. In an example embodiment, a ratio of the second diameter DI2 to the first diameter DI1 may range from about 1.5 to about 3.

FIGS. 8 and 9 depict by way of example that the holes THO1 and THO2 have substantially circular planar shapes. The planar shape and arrangement of the holes THO1 and THO2 are not limited to those illustrated in figures. For example, the holes THO1 and THO2 may have substantially oval planar shapes or substantially polygonal planar shapes, but the present disclosure is not especially limited thereto.

Referring back to FIG. 7, an average depth of the first holes THO1 may be the first depth DEP1, and an average depth of the second holes THO2 may be the second depth DEP2. The first depth DEP1 may be different from the second depth DEP2. The first holes THO1 may be formed relatively shallower than the second holes THO2. In an example embodiment, a ratio of the second depth DEP2 to the first depth DEP1 may range from about 1.2 to about 3.

The first positive electrode active material layer CAL1 may have a first thickness TK1, and the second positive electrode active material layer CAL2 may have a second thickness TK2.

In an example embodiment of the present disclosure, a ratio of the first depth DEP1 to the first thickness TK1 of the first positive electrode active material layer CAL1 may range from about 0.3 to about 0.5, from about 0.2 to about 0.4, or from about 0.1 to about 0.4. For example, the ratio (DEP1/TK1) may range from about 0.2 to about 0.4. The first thickness TK1 of the first positive electrode active material layer CAL1 may range from about 10 µm to about 200 µm, from about 30 µm to about 200 µm, or from about 50 µm to about 150 µm. The second thickness TK2 of the second positive electrode active material layer CAL2 may range from about 100 µm to about 400 µm, from about 100 µm to about 300 µm, or from about 150 µm to about 300 µm.

When the ratio of the first depth DEP1 to the first thickness TK1 of the first positive electrode active material layer CAL1 is less than about 0.2, a transfer rate of lithium ions in the first positive electrode active material layer CAL1 may be reduced and cause a reduction in battery charge/discharge rate. A ratio of the second thickness TK2 to the first thickness TK1 may range from about 1 to 4, from about 1.3 to about 3.8, or from about 1.5 to about 3.3.

In an example embodiment of the present disclosure, a ratio of the second depth DEP2 to the second thickness TK2 of the second positive electrode active material layer CAL2 may range from about 0.3 to about 0.6, from about 0.4 to about 0.7, or from about 0.5 to about 0.7. For example, the ratio (DEP2/TK2) may range from about 0.5 to about 0.7.

When the ratio of the second depth DEP2 to the second thickness TK2 of the second positive electrode active material layer CAL2 is greater than about 0.7, a depth of the second hole THO2 may become excessively increased and cause a deterioration in the structural stability of the second positive electrode active material layer CAL2. The second holes THO2 may cause the second positive electrode active material layer CAL2 to have a reduced volume, which may cause a decrease in the capacity of the positive electrode active material layer AML1.

The plurality of first holes THO1 according to examples of the present disclosure may be configured to allow the first positive electrode active material layer CAL1 to contact the electrolyte ELL. The plurality of second holes THO2 according to example of the present disclosure may be configured to allow the second positive electrode active material layer CAL2 to contact the electrolyte ELL. There may thus be an increase in transfer rate of lithium ions through the plurality of first and second holes THO1 and THO2, respectively formed on the first positive electrode active material layer CAL1 and the second positive electrode active material layer CAL2. As a result, a rechargeable lithium battery according to examples of the present disclosure may have improved characteristics of charge and discharge.

According to examples of the present disclosure, a reduction in volume of the positive electrode active material layer AML1 caused by the plurality of holes THO1 and THO2 may not be significant. Therefore, the plurality of holes THO1 and THO2 according to an example embodiment of the present disclosure may induce a significant increase in charge/discharge rate of the rechargeable lithium battery, and may not cause a significant reduction in battery capacity.

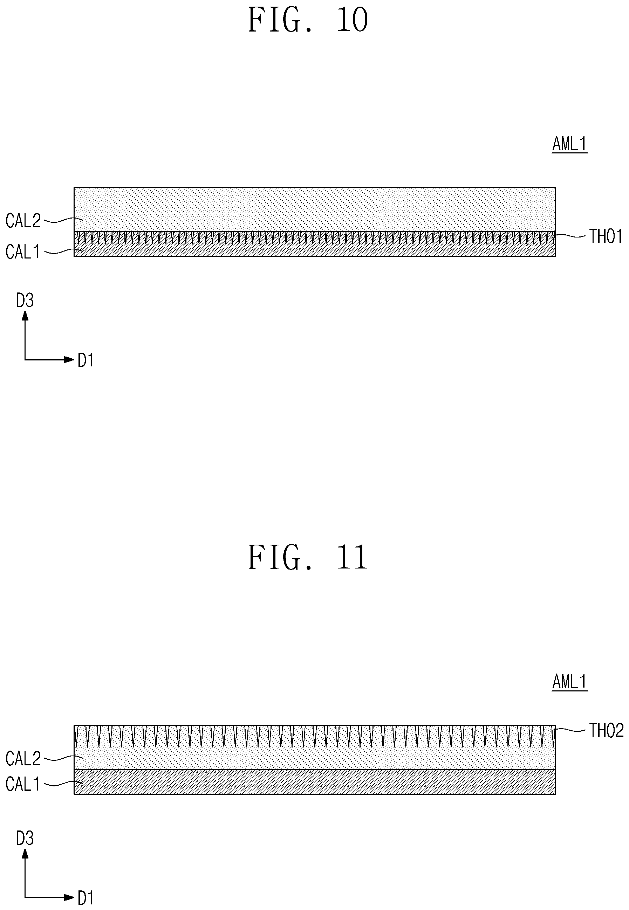

FIG. 10 is a cross-sectional view illustrating a positive electrode active material layer according to an example embodiment of the present disclosure. Referring to FIG. 10, a hole forming process may be performed only on the first positive electrode active material layer CAL1 among the first positive electrode active material layer CAL1 and the second positive electrode active material layer CAL2. When the plurality of first holes THO1 are formed only on the first positive electrode active material layer CAL1, there may be a decrease in battery capacity reduction compared to a case where the plurality of holes THO1 and THO2 are formed on both of the first positive electrode active material layer CAL1 and the second positive electrode active material layer CAL2. When the plurality of first holes THO1 are formed only on the first positive electrode active material layer CAL1, there may be a reduction in electrical conductivity compared to a case where the plurality of holes THO1 and THO2 are formed on both of the first positive electrode active material layer CAL1 and the second positive electrode active material layer CAL2.

FIG. 11 is a cross-sectional view illustrating a positive electrode active material layer according to an example embodiment of the present disclosure. Referring to FIG. 11, a hole forming process may be performed only on the second positive electrode active material layer CAL2 among the first positive electrode active material layer CAL1 and the second positive electrode active material layer CAL2. When the plurality of second holes THO2 are formed only on the second positive electrode active material layer CAL2, there may be a decrease in battery capacity reduction compared to a case where the plurality of holes THO1 and THO2 are formed on both of the first positive electrode active material layer CAL1 and the second positive electrode active material layer CAL2. When the plurality of second holes THO2 are formed only on the second positive electrode active material layer CAL2, there may be a reduction in electrical conductivity compared to a case where the plurality of holes THO1 and THO2 are formed on both of the first positive electrode active material layer CAL1 and the second positive electrode active material layer CAL2.

### Manufacture of Positive Electrode

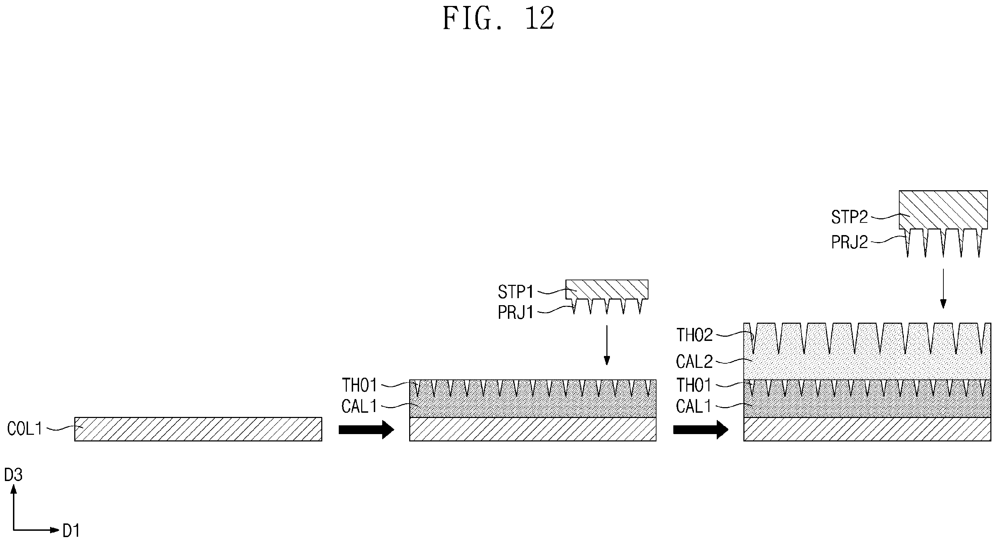

FIG. 12 illustrates a cross-sectional view illustrating a method of manufacturing a positive electrode according to an example embodiment of the present disclosure.

Referring to FIG. 12, a method of fabricating a positive electrode according to an example embodiment of the present disclosure may include providing a positive electrode current collector COL1, forming a first positive electrode active material layer CAL1 on the positive electrode current collector COL1, performing a first hole forming process on the first positive electrode active material layer CAL1 to form a plurality of first holes THO1, forming a second positive electrode active material layer CAL2 on the first positive electrode active material layer CAL1 that has experienced the first hole forming process, and performing a second hole forming process on the second positive electrode active material layer CAL2 to form a plurality of second holes THO2. The first positive electrode active material layer CAL1 may include the layered positive electrode active material discussed above in FIG. 7. The second positive electrode active material layer CAL2 may include the olivine-based positive electrode active material discussed above in FIG. 7.

### Preparation of First Positive Electrode Active Material Layer

The following describes in detail a method of preparing a first positive electrode active material layer according to some example embodiments of the present disclosure. A high-nickel-based precursor may be prepared. The high-nickel-based precursor may include Ni of Chemical Formula 1 mentioned above. An amount of Ni to the total amount of metal in the high-nickel-based precursor may be greater than about 80 at%. In an example embodiment, the high-nickel-based precursor may further include Co and Mn.

In an example embodiment, the high-nickel-based precursor may be obtained by a coprecipitation method. For example, the coprecipitation method may include dissolving a raw material of transition metal in a solvent such as distilled water, and causing precipitation by continuously providing a reactor with a transition metal salt solution along with a chelating agent and an alkaline aqueous solution. A precipitate may be collected in the form of slurry, and then a slurry solution may be filtered and dried to obtain metal composite oxide or the high-nickel-based precursor.

In the present disclosure, the raw material of transition metal may include a metal salt of Ni. The raw material of transition metal may further include a metal salt of at least one of Co and Mn. The metal salt may include at least one of sulfate, nitrate, acetate, halide, or hydroxide, and there is no particular limitation as long as a material can be dissolved in a solvent. According to an example embodiment, the raw material of transition metal may include at least one of a nickel salt, a cobalt salt, and a manganese salt. The raw material of transition metal may be mixed by adjusting a molar ratio to allow the high-nickel-based precursor to have a nickel amount of equal to or greater than about 80 at%.

The high-nickel-based precursor and a lithium source may be mixed in a certain ratio to form a mixture. For example, the high-nickel-based precursor and the lithium source may be mixed in a molar ratio of about 1:1. The lithium source may include at least one of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

A solvent may be removed from the mixture to form a dried mixture. The dried mixture may be calcined. A temperature of the calcination process may range from about 700°C to about 1,000°C or from about 900°C to about 1,000°C. The calcination process may be performed under an oxidizing atmosphere such as, e.g., air or oxygen. A heat treatment time of the calcination process may be in a range of about 10 hours to about 30 hours. In an example embodiment of the present disclosure, before the calcination process, a preliminary calcination process may be additionally performed at a temperature in a range of about 150°C to about 800°C.

In an example embodiment of the present disclosure, the calcination process may be performed after a melting agent is additionally introduced to the mixture. The melting agent may be or include a compound containing at least one of Zr, La, S, and Nb. The usage of the melting agent may cause a layered positive electrode active material included in a first positive electrode active material layer to be favorably formed in the shape of a single particle. In addition, the layered positive electrode active material may have an increased average particle diameter.

The calcination process may form the layered positive electrode active material from the mixture including the high-nickel-based precursor and the lithium source. A crushing process may be performed on the synthesized positive electrode active material.

A coating process may be performed on the crushed layered positive electrode active material. For example, the layered positive electrode active material and a coating raw material may be added to and mixed in a solvent. The coating raw material may include, for example, boron and/or aluminum. The layered positive electrode active material may be filtered and dried, and then a surface treatment may be performed on the layered positive electrode active material. The surface treatment may include performing a heat treatment process under an oxidizing atmosphere such as, e.g., air or oxygen. The surface treatment may be performed at a temperature in a range of about 500°C to about 800°C.

In an example embodiment of the present disclosure, the coating process may include a dry coating process. For example, the layered positive electrode active material and the coating raw material may be introduced without any solvent into a dry coating apparatus, and may be stirred to mix with each other. The surface treatment may be performed on an obtained dry mixture.

### Preparation of Second Positive Electrode Active Material Layer

The following describes in detail a method of preparing a second positive electrode active material layer according to some example embodiments of the present disclosure. An iron phosphate precursor, a lithium source, a carbon source, and a dopant source may be added to and mixed in a solvent. For example, the solvent may be water or ethanol. The iron phosphate precursor may be or include at least one of a compound containing all of iron (F) and phosphorus (P), or a mixture of a compound containing iron (F) and a compound containing phosphorus (P). For example, the iron phosphate precursor may include FePO₄·H₂O or a mixture of FeSO₄ and H₃PO₄.

The lithium source may include at least one of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one of glucose, sucrose, fructose, cellulose, starch, citric acid, polyacrylic acid, polyethylene glycol, and dopamine.

The dopant source may include oxide containing dopant metal and/or chloride containing dopant metal. For example, the dopant source may include at least one of titanium oxide, magnesium oxide, vanadium oxide, and niobium oxide.

A wet crushing may be performed on the mixture. The wet crushing may use an ordinary wet mill capable of controlling temperatures. For example, the wet crushing may use at least one of a beads mill, a ball mill, an attrition mill, an apex mill, a super mill, and a basket mill. During the wet crushing process, particles in the mixture may be crushed to fine sizes.

A solvent may be removed from the mixture to form a dried mixture. In an example embodiment of the present disclosure, the formation of the dried mixture may include performing direct evaporation on the mixture. For example, the direct evaporation may include a static drying or a spray drying.

The dried mixture may be calcined under an inert atmosphere. The inert atmosphere may be a nitrogen atmosphere and/or an argon atmosphere. A temperature of the calcination process may range from about 500°C to about 1,000°C or from about 600°C to about 800°C. The calcination process may be performed for about 4 hour to about 20 hours or about 6 hours to about 12 hours. The calcination of the dried mixture may form an olivine-based positive electrode active material including the compound represented by Chemical Formula 2 mentioned above. A dry crushing process may be performed on the calcined olivine-based positive electrode active material.

At least one of the formation of the first positive electrode active material layer CAL1 and the formation of the second positive electrode active material layer CAL2 may be carried out through a wet process or a dry process. In an example embodiment, the first positive electrode active material layer CAL1 may be formed by a wet process, and the second positive electrode active material layer CAL2 may be formed by a dry process. In an example embodiment, the first positive electrode active material layer CAL1 may be formed by a dry process, and the second positive electrode active material layer CAL2 may also be formed by a dry process. The present disclosure, however, is not limited thereto.

The wet process may be performed in such a way that a positive electrode active material, a conductive material, and a binder are mixed in a solvent to prepare a positive electrode mixture, and the mixture is coated, dried, and pressed on a current collector. The solvent in slurry may be or include a commonly used solvent in the art, and for example, may include at least one of dimethyl sulfoxide (DMSO), isopropyl alcohol, N-methyl pyrrolidone (NMP), acetone, water, and a combination thereof.

The dry process may be performed in such a way that a positive electrode active material, a dry conductive material, and a dry binder are dry-mixed without a solvent to prepare a positive electrode mixture, and the mixture is disposed and pressed on a current collector.

Each of the first hole forming process and the second hole forming process may be performed using one of a laser, a stamp, and a roller, but the present disclosure is not limited thereto. In an example embodiment, as illustrated in FIG. 12, the holes THO1 and THO2 may be physically formed by stamps STP1 and STP2 on which fine projections PRJ1 and PRJ2 are provided.

For example, the formation of the plurality of first holes THO1 may be formed by using a first stamp STP1 including a first projection PRJ1. The formation of the plurality of second holes THO2 may be formed by using a second stamp STP2 including a second projection PRJ2.

A protruding length of the first projection PRJ1 may be different from that of the second projection PRJ2. For example, the protruding length of the first projection PRJ1 may be less than that of the second projection PRJ2. A diameter of the first projection PRJ1 may be different from that of the second projection PRJ2. For example, the diameter of the first projection PRJ1 may be less than that of the second projection PRJ2.

The first projection PRJ1 and the second projection PRJ2 may independently have at least one of a conical shape, a pyramid shape, a cylindrical shape, and a prism shape, but the present disclosure is not limited thereto.

Afterwards, a positive electrode may sequentially undergo a roll pressing process, a slitting process, and a notching process. The positive electrode 10, the separator 30, and the negative electrode 20 may be stacked, and the electrolyte ELL may be provided to fabricate a rechargeable lithium battery according to the present disclosure.

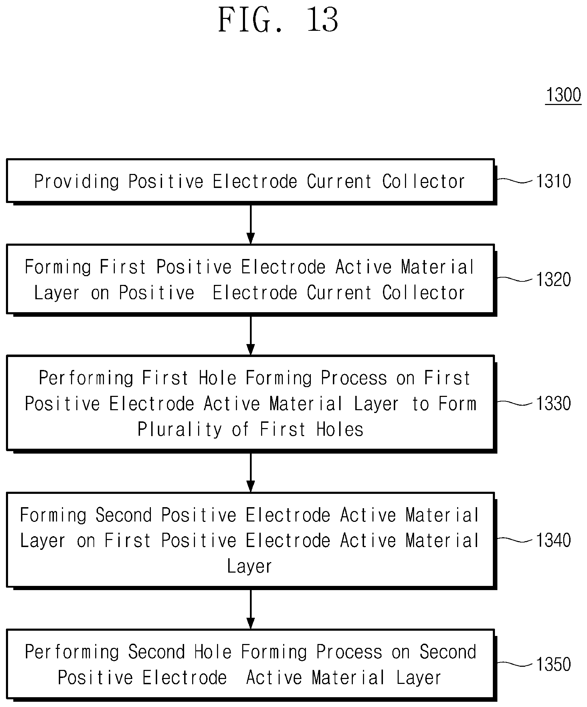

FIG. 13 is a flowchart illustrating a method of manufacturing a positive electrode for a rechargeable lithium battery, according to various examples of the disclosure. In FIG. 13, the method 1300 starts with operation 1310, which includes providing a positive electrode current collector. Operation 1320 includes forming a first positive electrode active material layer on the positive electrode current collector. Operation 1330 includes performing a first hole forming process on the first positive electrode active material layer to form a plurality of first holes. For example, forming the plurality of first holes is performed using a first stamp that includes a first projection. Operation 1340 includes forming a second positive electrode active material layer on the first positive electrode active material layer on which the first hole forming process is performed. Operation 1350 includes performing a second hole forming process on the second positive electrode active material layer to form a plurality of second holes. In an example, forming the plurality of second holes is performed using a second stamp that includes a second projection. For example, a protruding length of the first projection is less than a protruding length of the second projection. In another example, a diameter of the first projection is less than a diameter of the second projection. In yet another example, the first projection and the second projection independently have one of a conical shape, a pyramid shape, a cylindrical shape, and a prism shape. The first positive electrode active material layer may include a layered positive electrode active material, and the second positive electrode active material layer includes an olivine-based positive electrode active material. In examples, at least one of forming the first positive electrode active material layer and forming the second positive electrode active material layer is carried out through a wet process or a dry process. In other examples, each, or at least one, of the first hole forming process and the second hole forming process is performed using one of a laser, a stamp, and a roller

### Embodiment 1

For preparation of a first positive electrode active material layer, a coprecipitation process was used to prepare a high-nickel-based precursor. For example, nickel sulfate (NiO₄·6H₂O), cobalt sulfate (CoSO₄·7H₂O), and manganese sulfate (MnSO₄·H₂O) in a molar ratio of 92:5:2 as a raw material of nickel-based metal hydroxide were dissolved in distilled water as a solvent to prepare a metal raw material mixture solution. The metal raw material mixture solution, ammonium hydroxide, and sodium hydroxide were added to and reacted in a reactor. A slurry solution in the reactor was filtered and washed with high-purity distilled water. The washed material was dried in a hot-air oven at 210°C for 24 hours to obtain powder of small-particle precursor (Ni_{0.92}0Co_{0.05}Mn_{0.02}(OH)₂) having a particle size of about 4 µm.

A Henschel mixer was used such that the high-nickel-based precursor and anhydrous lithium hydroxide (LiOH) were mixed in a dry type. Lithium and transition metal were mixed in a molar ratio of about 1:1. The transition metal was a total sum (Ni+Co+Mn) of transition metals contained in the high-nickel-based precursor. A melting agent was additionally added to the mixture and thermally treated (or calcined) for 15 hours at about 750°C to synthesize a high-nickel-based positive electrode active material. The high-nickel-based positive electrode active material was crushed with a Jet Mill under a pressure of 3 bars.

The high-nickel-based positive electrode active material, or a first positive electrode active material, was added to and washed with distilled water. A boron and aluminum coating was performed by introducing boron oxide and aluminum oxide present in an amount of 3 mol% relative to the sum total of transition metal of the high-nickel-based positive electrode active material. The first positive electrode active material was dried for 12 hours at 150°C, and a heat treatment (or, surface treatment) was performed for 15 hours at about 700°C under an oxygen atmosphere.

For preparation of a second positive electrode active material layer, Fe₁PO₄·H₂O as an iron phosphate precursor and lithium carbonate in molar ratio of 1:1.03, 2500 ppm of titanium dioxide, and 8 wt% of glucose were mixed in water. A ball mill was used to perform a wet crushing process on the mixture. The mixture was evaporated and dried on a heating furnace tray, and then introduced into a vacuum oven at 85°C and dried for 4 hours. The dried mixture was calcined at 650°C for about 10 hours. The calcined mixture was crushed to obtain a second positive electrode active material in the form of a single particle.

The first positive electrode active material was coated on an aluminum current collector. The coated first positive electrode active material was first dried at 80°C, and then pressed to form a first positive electrode active material layer. A hole forming process using a stamp was performed on the first positive electrode active material layer to form first holes. A second positive electrode mixture was placed on the first positive electrode active material layer having the first holes formed therein, and then pressed to form a second positive electrode active material layer.

In the hole forming process for forming the first holes THO1, a hole was processed to allow a ratio (DEP1/TK1) of a first depth to a first thickness to be equal to 0.25 and a ratio (DI1/PI1) of a first diameter to a first pitch to be equal to 0.3, thereby manufacturing a positive electrode of Embodiment 1.

### Embodiment 2

The first positive electrode active material of Embodiment 1 was coated on an aluminum current collector. The coated first positive electrode active material was first dried at 80°C, and then pressed to form a first positive electrode active material layer. No hole forming process was performed on the first positive electrode active material layer, and the second positive electrode mixture of Embodiment 1 was placed and pressed on the first positive electrode active material layer to form a second positive electrode active material layer. A hole forming process using a stamp was performed on the second positive electrode active material layer to form second holes.

In the hole forming process for forming the second holes THO2, a hole was processed to allow a ratio (DEP2/TK2) of a second depth to a second thickness to be equal to 0.4 and a ratio (DI2/PI2) of a second diameter to a second pitch to be equal to 0.3.

### Embodiment 3

The first positive electrode active material of Embodiment 1 was coated on an aluminum current collector. The coated first positive electrode active material was first dried at 80°C, and then pressed to form a first positive electrode active material layer. A hole forming process using a stamp was performed on the first positive electrode active material layer to form first holes. A second positive electrode mixture was placed on the first positive electrode active material layer having the first holes formed therein, and then pressed to form a second positive electrode active material layer. A hole forming process using a stamp was performed on the second positive electrode active material layer to form second holes.

In the hole forming process for forming the first holes THO1, a hole was processed to allow a ratio (DEP1/TK1) of a first depth to a first thickness to be equal to 0.25 and a ratio (DI1/PI1) of a first diameter to a first pitch to be equal to 0.3. In the hole forming process for forming the second holes THO2, a hole was processed to allow a ratio (DEP2/TK2) of a second depth to a second thickness to be equal to 0.4 and a ratio (DI2/PI2) of a second diameter to a second pitch to be equal to 0.3. In this case, a hole was processed to allow a ratio (DEP2/DEP1) of the second depth to the first depth to be equal to 2 and a ratio (PI2/PI1) of the second pitch to the first pitch to be equal to 3.5, thereby manufacturing a positive electrode of Embodiment 1 (see FIG. 7).

### Comparative 1

A single-layered positive electrode active material layer including only the second positive electrode active material of Embodiment 1 was prepared, and no hole forming process was separately performed.

### Comparative 2

A single-layered positive electrode active material layer including only the first positive electrode active material of Embodiment 1 was prepared, and no hole forming process was performed separately.

### Comparative 3

A first positive electrode active material layer and a second positive electrode active material layer of Embodiment 1 were prepared, and no hole forming process was separately performed.

The positive electrodes of Embodiments 1 to 3 and Comparative 1 are summarized and illustrated in Table 1 below.

**Table 1:**

| | First hole (THO1) | | Second hole (THO2) | | Second hole (THO2) / First hole (THO1) | |
|---|---|---|---|---|---|---|
| | Depth (DEP1/TK1) | Diameter (DII/PI1) | Depth (DEP2/TK2) | Diameter (DI2/PI2) | Depth (DEP2/DEP1) | Pitch (PI2/PI1) |
| Embodiment 1 | 0.25 | 0.3 | - | - | - | - |
| Embodiment 2 | - | - | 0.4 | 0.3 | - | - |
| Embodiment 3 | 0.25 | 0.3 | 0.4 | 0.3 | 2 | 3.5 |
| Comparative 3 | - | - | - | - | - | - |

### Evaluation 1: Energy Density

Hole depths and energy densities of the positive electrode layers according to Embodiments 1 to 3 and Comparatives 1 to 3 were measured and illustrated in Table 2 below.

**Table 2:**

| | Hole depth (µm) | E/D (Wh/L) |
|---|---|---|
| Embodiment 1 | 16.25 | 500 |
| Embodiment 2 | 104 | 500 |
| Embodiment 3 | 120.25 | 500 |
| Comparative 1 | - | 390 |
| Comparative 2 | - | 600 |
| Comparative 3 | - | 500 |

### Evaluation 2: Cycle-Life Characteristics

Cycle-life characteristics of cells fabricated with the positive electrode active material layers according to Embodiments 1 to 3 and Comparatives 1 to 3 were evaluated and illustrated in Table 3 below. Table 3 lists the number of cycles until battery performance reaches 80% and an average efficiency of 100 cycles.

**Table 3:**

| | Cycle life (at 80%) | Average efficiency of 100 cycles (%) |
|---|---|---|
| Embodiment 1 | 10,000 cycles or more | 101.3 |
| Embodiment 2 | 10,000 cycles or more | 101.2 |
| Embodiment 3 | 12,000 cycles or more | 101.5 |
| Comparative 1 | 9,000 cycles or more | 99.9 |
| Comparative 2 | 7,000 cycles or more | 99.7 |
| Comparative 3 | 6,000 cycles or more | 99.5 |

Referring to Table 2, Embodiments 1 to 3 show almost no decrease in specific capacity compared to Comparatives 1 to 3. As the loss of the positive electrode active material occurs only at a level that does not affect the battery performance, there is no significant reduction in specific capacity of the battery.

Referring to Table 3, Embodiments 1 to 3 exhibit an improvement in cycle-life characteristics compared to Comparatives 1 to 3. Therefore, the rechargeable lithium battery according to some example embodiments of the present disclosure includes both a layered positive electrode active material and an olivine-based positive electrode active material, and a hole forming process is performed on each positive electrode active material layer, which results in an improvement in long cycle-life characteristics of the battery.

In conclusion, as the rechargeable lithium battery according to some example embodiments of the present disclosure includes a hole having an appropriate size and depth, a high specific capacity of the positive electrode and an improvement in transfer rate of lithium ions are realized to achieve desired or improved charge/discharge characteristics.

In the present disclosure, a plurality of holes may be formed in each of an upper layer section and a lower layer section that constitute a positive electrode active material layer, and may thus provide a physical transfer path of lithium ions. In addition, a diffusion passage of lithium ions may become wide and shortened through the holes configured to allow each positive electrode active material layer to contact an electrolyte, which may result in an increase in transfer rate of lithium ions. Consequently, the rechargeable lithium battery according to the present disclosure may exhibit a desired or improved capacity and superior charge/discharge characteristics.

Although some example embodiments of the present disclosure have been discussed with reference to accompanying figures, it is understood that various changes in form and details may be made therein without departing from the scope of the present disclosure. It is apparent to those skilled in the art that various substitution, modifications, and changes may be brought thereto without departing from the scope of the present disclosure.

## Claims

1. A positive electrode for a rechargeable lithium battery, the positive electrode comprising:
a positive electrode current collector; and
a positive electrode active material layer on the positive electrode current collector,
wherein the positive electrode active material layer includes a first positive electrode active material layer and a second positive electrode active material layer that are stacked on the positive electrode current collector,
wherein the first positive electrode active material layer includes a layered positive electrode active material,
wherein the second positive electrode active material layer includes an olivine-based positive electrode active material,
wherein the first positive electrode active material layer includes a plurality of first holes, and
wherein the second positive electrode active material layer includes a plurality of second holes.

2. The positive electrode of claim 1, wherein:
the first positive electrode active material layer includes a compound of Chemical Formula 1,
the second positive electrode active material layer includes a compound of Chemical Formula 2,
Chemical Formula 1: Liₐ₁Niₓ₁CO_{y1}Mn_{z1}X_{c1}O_{2-b1}
wherein, in Chemical Formula 1,
0.8≤a1≤1.2, 0.9≤x1≤1.0, 0≤y1≤0.1, 0≤z1≤0.1 0≤c1≤0.05, 0≤b1≤0.05, and x1+y1+z1+c1=1, and
X comprises at least one of Al, Ti, Mg, Zr, Mo, and Nb,
Chemical Formula 2: Liₐ₂Feₓ₂B_{y2}PO_{4-b2}
wherein, in Chemical Formula 2,
0.8≤a2≤1.2, 0.1≤x2≤1.0, 0≤y2≤0.05, 0≤b2≤0.05, and x2+y2≤1, and B comprises at least one of Ti, Mg, V, and Nb.

3. The positive electrode of claim 1 or 2, wherein:
the plurality of first holes have a first pitch,
the plurality of second holes have a second pitch, and
the first pitch is less than the second pitch.

4. The positive electrode of claim 3, wherein a ratio of the second pitch to the first pitch is in a range of about 2 to about 5.

5. The positive electrode of any one of claims 1 to 4, wherein a density of the plurality of first holes is greater than a density of the plurality of second holes.

6. The positive electrode of any one of claims 1 to 5, wherein:
an average depth of the plurality of first holes is a first depth,
an average depth of the plurality of second holes is a second depth, and
the first depth is less than the second depth.

7. The positive electrode of claim 6, wherein a ratio of the second depth to the first depth is in a range of about 1.2 to about 3.

8. The positive electrode of any one of claims 1 to 7, wherein a ratio of a thickness of the second positive electrode active material layer to a thickness of the first positive electrode active material layer is in a range of about 1.5 to about 3.3.

9. The positive electrode of any one of claims 1 to 8, wherein:
the plurality of first holes are configured to allow the first positive electrode active material layer to contact an electrolyte, and
the plurality of second holes are configured to allow the second positive electrode active material layer to contact the electrolyte.

10. A method of manufacturing a positive electrode for a rechargeable lithium battery, the method comprising:
providing a positive electrode current collector;
forming a first positive electrode active material layer on the positive electrode current collector;
performing a first hole forming process on the first positive electrode active material layer to form a plurality of first holes;
forming a second positive electrode active material layer on the first positive electrode active material layer on which the first hole forming process is performed; and
performing a second hole forming process on the second positive electrode active material layer to form a plurality of second holes,
wherein the first positive electrode active material layer includes a layered positive electrode active material, and
wherein the second positive electrode active material layer includes an olivine-based positive electrode active material.

11. The method of claim 10, wherein at least one of forming the first positive electrode active material layer and forming the second positive electrode active material layer is carried out via one of a wet process and a dry process.

12. The method of claim 10, wherein at least one of the first hole forming process and the second hole forming process is performed using one of a laser, a stamp, and a roller.

13. The method of any one of claims 10 to 12, wherein:
forming the plurality of first holes is performed using a first stamp that includes a first projection,
forming the plurality of second holes is performed using a second stamp that includes a second projection, and
wherein a protruding length of the first projection is less than a protruding length of the second projection.

14. The method of claim 13, wherein the first projection and the second projection independently have one of a conical shape, a pyramid shape, a cylindrical shape, and a prism shape.

15. A rechargeable lithium battery, comprising:
the positive electrode as set forth in any one of claims 1 to 9;
a negative electrode that includes a negative electrode current collector and a negative electrode coating layer on the negative electrode current collector; and
a separator between the positive electrode and the negative electrode.
